# EUROPÄISCHE PATENTANMELDUNG

(11) **EP 0 582 898 A1**
(43) Veröffentlichungstag der Anmeldung: **16.02.1994**
(21) Anmeldenummer: 93112090.1
(22) Anmeldetag: 28.07.1993
(51) Int. Cl.: F01K 23/10

(54) **Verfahren zum Betreiben einer Gas- und Dampfturbinenanlage sowie danach arbeitende Gud-Anlage**

(30) Priorität: 10.08.1992 DE 4226462
(71) Anmelder: SIEMENS AKTIENGESELLSCHAFT, D-80333 München (DE)
(72) Erfinder: Brückner, Hermann, D-91080 Uttenmreuth (DE); Schmid, Erich, Dipl.-Ing., D-91080 Marloffstein (DE)

(57) **Zusammenfassung**

Bei einer Gas- und Dampfturbinenanlage (1) wird die im entspannten Arbeitsmittel (RG') der Gasturbine (2) enthaltene Wärme zur Erzeugung von Dampf für die Dampfturbine (10) genutzt. Erfindungsgemäß wird zum Erreichen einer besonders einfachen Betriebsweise das im Wasser-Dampf-Kreislauf (12) der Dampfturbine (10) strömende Kondensat speicherfrei, d.h. in technisch einfacher Weise ohne Speisewasserbehälter, vorgewärmt, wobei eine erste Teilmenge (t₁; t₁', t₁'') des vorgewärmten Kondensats in einer Schleife (48; 148, 248) zur weiteren Vorwärmung zurückgeführt wird, und wobei eine zweite Teilmenge (t₂; t₂', t₃') des vorgewärmten Kondensats verdampft wird.

## Beschreibung

Die Erfindung bezieht sich auf ein Verfahren zum Betreiben einer Gas- und Dampfturbinenanlage, bei dem die im entspannten Arbeitsmittel der Gasturbine enthaltene Wärme zur Erzeugung von Dampf für die Dampfturbine genutzt wird. Sie richtet sich weiter auf eine nach diesem Verfahren betriebene GuD-Anlage.

Bei einer Gas- und Dampfturbinenanlage wird die im entspannten Rauchgas der Gasturbine enthaltene Wärme zur Erzeugung von Dampf für die Dampfturbine genutzt. Die Wärmeübertragung erfolgt in einem der Gasturbine nachgeschalteten Dampferzeuger oder Abhitzekessel, in dem Heizflächen in Form von Rohren oder Rohrbündeln angeordnet sind, die in den Wasser-Dampf-Kreislauf der Dampfturbine geschaltet sind. Der Wasser-Dampf-Kreislauf umfaßt einen oder mehrere Druckstufen, wobei jede Druckstufe eine Verdampfer-Heizfläche und eine Überhitzer-Heizfläche aufweist. Eine derartige GuD-Anlage ist z.B. aus der Europäischen Patentschrift 0 148 973 bekannt.

In einer derartigen GuD-Anlage umfaßt der Wasser-Dampf-Kreislauf üblicherweise einen Speisewasserbehälter, in dem vorgewärmter kondensierter Dampf aus der Dampfturbine gesammelt und häufig auch entgast wird. Aus diesem Speisewasserbehälter wird vorgewärmtes Kondensat, das auch als Speisewasser bezeichnet wird, mittels einer der Anzahl der Druckstufen entsprechenden Anzahl von Speisewasserpumpen zu den Verdampfersystemen geführt. Die Vorwärmung des Kondensats erfolgt in einem mit dem Speisewasserbehälter verbundenen Kondensatvorwärmer, wobei dessen Heizfläche häufig ebenfalls im Abhiotzekessel liegt. Der Speisewasserbehälter dient somit als Pufferbehälter oder Zwischenspeicher für die Speisewasserversorgung der nachgeschalteten Verdampfersysteme. Der Einsatz eines Speisewasserbehälters erfordert neben einer Einstellung und Überwachung der Temperatur des Kondensats am Eingang und am Ausgang des Kondensatvorwärmers auch eine Einstellung und Überwachung der bereitgestellten Speisewassermenge und des Speisewasserdrucks, um eine Ausdampfung der Heizfläche des Kondensatvorwärmers zu vermeiden. Die dazu erforderlichen Steuer- oder Regeleinrichtungen stellen einen hohen leittechnischen Aufwand dar und müssen sorgsam ausgelegt werden, weil sich die Regelgrößen gegenseitig beeinflussen.

Bei einer Entgasung, insbesondere bei einer üblicherweise vorgesehenen Überdruckentgasung, des Kondensats im Speisewasserbehälter wird das Speisewasser bei geringem Überdruck auf eine Temperatur von etwa 120° C, das heißt auf Siedetemperatur, vorgewärmt. Dazu ist häufig eine zusätzliche Einspeisung von Dampf aus dem Wasser-Dampf-Kreislauf in den Speisewasserbehälter erforderlich, um zu vermeiden, daß die auszutreibenden Gase erneut in Lösung gehen. Erfolgt die Entgasung des Kondensats ausschließlich in einem der Dampfturbine nachgeschalteten Kondensator, d.h. in dessen sogenannten Hotwell, so wird das Speisewasser im Kondensatvorwärmer annähernd auf eine der nachgeschalteten Verdampferstufe entsprechende Temperatur vorgewärmt. Unabhängig davon, ob der Speisewasserbehälter mit oder ohne Entgasung betrieben wird, ist der Gesamtwirkungsgrad der Anlage nur begrenzt, weil in beiden Fällen nur eine begrenzte Abkühlung des aus dem Dampferzeuger austretenden Rauchgases oder Abgases erreichbar ist.

Der Erfindung liegt die Aufgabe zugrunde, ein Verfahren zum Betreiben einer Gas- und Dampfturbinenanlage sowie eine derartige Anlage derart auszubilden, daß eine möglichst einfache Betriebsweise mit geringem technischem Aufwand erreicht wird.

Bezüglich des Verfahrens wird diese Aufgabe erfindungsgemäß dadurch gelöst, daß im Wasser-Dampf-Kreislauf der Dampfturbine strömendes Kondensat speicherfrei vorgewärmt wird, daß eine erste Teilmenge des vorgewärmten Kondensats in einer Schleife zur Vorwärmung zurückgeführt wird, und daß eine zweite Teilmenge des vorgewärmten Kondensats verdampft wird.

Dadurch wird eine besonders einfache Betriebsweise ohne den Einsatz eines Speisewasserbehälters erreicht. Außerdem entfällt aufgrund der Identität von Kondensat- und Speisewassermenge eine üblicherweise zuvor vorgesehene Speisewasserversorgung mit entsprechender Temperatur-, Mengen- und Druckeinstellung sowie Überwachung dieser Parameter. Zur Einstellung und Überwachung der umzuwälzenden Kondensatmenge sowie der Kondensattemperatur wird lediglich die pro Zeiteinheit in der Schleife geführte Teilmenge des vorgewärmten Kondensats entsprechend verändert.

In vorteilhafter Weiterbildung des Verfahrens erfolgt die Verdampfung in mehreren, vorzugsweise in zwei Druckstufen, wobei jeder Druckstufe vorgewärmtes Kondensat zugeführt wird. Alternativ kann die Vorwärmung des Kondensats und die Verdampfung des vorgewärmten Kondensats jeweils in einer der Anzahl der Druckstufen entsprechenden Anzahl von Kreisen erfolgen. In beiden Fällen sind vorteilhafterweise die Dampfströme der verschiedenen Druckstufen zueinander parallel.

Bezüglich der Gas- und Dampfturbinenanlage, die einen der Gasturbine nachgeschalteten Dampferzeuger umfaßt, dessen Heizflächen in den Wasser-Dampf-Kreislauf der Dampfturbine geschaltet sind, wird die Aufgabe erfindungsgemäß gelöst durch mindestens einen Kondensatvorwärmer, der zum speicherfreien Zuführen von Kondensat eingangsseitig direkt, d.h. ohne Zwischenschaltung eines Speisewasserbehälters, mit einem der Dampfturbine nachgeschalteten Kondensator verbunden ist. Der Kondensatvorwärmer ist ausgangsseitig einerseits über eine Umwälzpumpe mit seinem Eingang und andererseits mit einem Verdampfer verbunden.

Der Kondensatvorwärmer ist vorteilhafterweise ausgangsseitig sowohl mit einem Niederdruck-Verdampfer als auch über eine Hochdruckpumpe mit einem Hochdruck-Verdampfer verbunden. Alternativ kann eine der Anzahl von verschiedenen Druckstufen - vorzugsweise zwei Druckstufen - entsprechende Anzahl von Kondensatvorwärmern vorgesehen sein, von denen jeder wiederum ausgangsseitig mit seinem Eingang und mit einem Verdampfer einer der Druckstufen verbunden ist. Die Kondensatvorwärmer sind dann zweckmäßigerweise innerhalb des Dampferzeugers im Bereich gleicher Rauchgastemperatur angeordnet.

Ausführungsbeispiele der Erfindung werden anhand einer Zeichnung näher erläutert; darin zeigen:
Figur 1 eine Gas- und Dampfturbinenanlage mit einem gemeinsamen Kondensatvorwärmer für zwei Druckstufen, und
Figur 2 eine Anlage gemäß Figur 1 mit jeweils einem Kondensatvorwärmer für jede der beiden Druckstufen.

Einander entsprechende Teile sind in beiden Figuren mit den gleichen Bezugszeichen versehen.

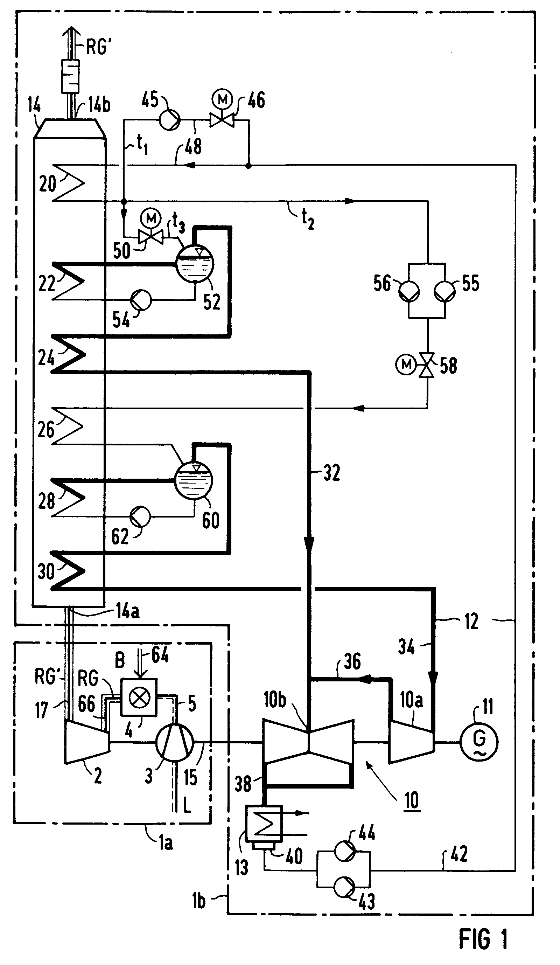

Eine Gas- und Dampfturbinenanlage gemäß Figur 1 umfaßt eine Gasturbinenanlage 1a und eine Dampfturbinenanlage 1b. Die Gasturbinenanlage 1a umfaßt eine Gasturbine 2 mit angekoppeltem Luftverdichter 3 und eine der Gasturbine 2 vorgeschaltete Brennkammer 4, die an eine Frischluftleitung 5 des Luftverdichters 3 angeschlossen ist.

Die Dampfturbinenanlage 1b umfaßt eine Dampfturbine 10 mit angekoppeltem Generator 11 und in einem Wasser-Dampf-Kreislauf 12 einen der Dampfturbine 10 nachgeschalteten Kondensator 13 sowie einen Dampferzeuger 14. Die Gasturbine 2 und der Luftverdichter 3 sowie die Dampfturbine 10 und der Generator 11 sitzen auf einer gemeinsamen Welle 15.

Die Dampfturbine 10 besteht aus einem Hochdruckteil 10a und einem Niederdruckteil 10b, die über die Welle 15 den Generator 11 antreiben.

Zum Zuführen der Abgase oder Rauchgase RG' aus der Gasturbine 2 in den Dampferzeuger 14 ist eine Abgasleitung 17 an einen Eingang 14a des Dampferzeugers 14 angeschlossen. Das Abgas RG' verläßt den Dampferzeuger 14 über dessen Ausgang 14b in Richtung auf einen (nicht dargestellten) Kamin.

Der Dampferzeuger 14 umfaßt einen Kondensatvorwärmer 20 und in einer Niederdruckstufe einen Niederdruck-Verdampfer 22 sowie einen Niederdruck-Überhitzer 24. Er umfaßt weiter in einer Hochdruckstufe einen Hochdruck-Vorwärmer oder Economizer 26, einen Hochdruck-Verdampfer 28 und einen Hochdruck-Überhitzer 30. Der Niederdruck-Überhitzer 24 ist über eine Dampfleitung 32 mit dem Niederdruckteil 10b der Dampfturbine 10 verbunden. Der Hochdruck-Überhitzer 30 ist über eine Dampfleitung 34 mit dem Hochdruckteil 10a der Dampfturbine 10 verbunden. Der Hochdruckteil 10a ist ausgangsseitig über eine Dampfleitung 36 mit dem Niederdruckteil 10b verbunden, der seinerseits ausgangsseitig über eine Dampfleitung 38 an den Kondensator 13 angeschlossen ist.

Der Kondensator 13, das heißt dessen Hotwell 40, ist über eine Kondensatleitung 42 mit dem Kondensatvorwärmer 20 direkt verbunden. In der Kondensatleitung 42 liegen redundant zwei zueinander parallel geschaltete, leistungsgleiche Kondensatpumpen 43 und 44. Der Kondensatvorwärmer 20 ist ausgangsseitig über eine Umwälzpumpe 45 und ein Stellglied oder Ventil 46 zur Bildung einer Schleife 48 mit seinem Eingang, d.h. mit der Kondensatleitung 42, verbunden. Der Kondensatvorwärmer 20 ist weiter ausgangsseitig über ein Ventil 50 mit einer Niederdruck-Trommel 52 verbunden, die über eine Umwälzpumpe 54 mit dem Niederdruck-Verdampfer 22 und mit dem Niederdruck-Überhitzer 24 verbunden ist. Die Niederdruck-Trommel 52 und der Verdampfer 22 sowie der Überhitzer 24 bilden das Verdampfersystem der Niederdruckstufe.

Ferner ist der Kondensatvorwärmer 20 ausgangsseitig redundant über zwei Hochdruckpumpen 55 und 56 und ein Ventil 58 mit dem Economizer 26 eingangsseitig verbunden. Dieser ist ausgangsseitig mit einer Hochdruck-Trommel 60 verbunden, die über eine Umwälzpumpe 62 mit dem Hochdruck-Verdampfer 28 und mit dem Hochdruck Überhitzer 30 verbunden ist. Die Hochdruck-Trommel 60 und der Verdampfer 28 sowie der Überhitzer 30 bilden das Verdampfersystem der Hochdruckstufe.

Beim Betrieb der Gas- und Dampfturbinenanlage 1a, 1b wird der Brennkammer 4 Brennstoff B über eine Zuführleitung 64 zugeführt. Der Brennstoff B wird in der Brennkammer 4 mit verdichteter Frischluft L aus dem Luftverdichter 3 verbrannt. Das bei der Verbrennung entstehende heiße Rauchgas RG wird über eine Rauchgasleitung 66 in die Gasturbine 2 geleitet. Dort entspannt es sich und treibt dabei die Gasturbine 2 an. Diese wiederum treibt den Luftverdichter 3 und den Generator 11 an. Das aus der Gasturbine 2 austretende heiße Rauchgas oder Abgas RG' wird über die Abgasleitung 17 in den Dampferzeuger 14 eingeleitet und dort zur Erzeugung von Dampf für die Dampfturbine 10 genutzt.

Zu diesem Zweck sind der Abgasstrom und der Wasser-Dampf-Kreislauf 12 im Gegenstrom miteinander verknüpft.

Der aus dem Niederdruckteil 10b der Dampfturbine 10 austretende Dampf wird über die Dampfleitung 38 dem Kondensator 13 zugeführt und kondensiert dort. Das Kondensat wird über die Kondensatpumpen 43 und/oder 44 in den Kondensatvorwärmer 20 gepumpt und dort vorgewärmt. Eine erste Teilmenge t₁ des vorgewärmten Kondensats wird in der Schleife 48 zur Vorwärmung zurückgeführt. Eine zweite Teilmenge t₂ und eine dritte Teilmenge t₃ werden über die Hochdruck-Trommel 60 dem Hochdruck-Verdampfer 28 bzw. über die Niederdruck-Trommel 52 dem Niederdruck-Verdampfer 22 zugeführt.

Eine Einstellung der den Verdampfersytemen pro Zeiteinheit zugeführten Teilmengen t₂ und t₃ sowie eine Einstellung der Kondensattemperatur am Eingang und am Ausgang des Kondensatvorwärmers 20 erfolgt mittels des Ventils 46, wobei die in der Schleife 48 geführte Teilmenge t₁ entsprechend verändert wird. So beträgt z.B. die Teilmenge t₂ etwa 80% und die Teilmenge t₃ etwa 20% der verfügbaren Kondensatmenge, wobei kontinuierlich etwa 20% des Kondensats als Teilmenge t₁ in der Schleife 48 strömt. Durch Variation der Teilmenge t₁ kann die Vorwärmtemperatur des Kondensats über einen großen Bereich variiert werden.

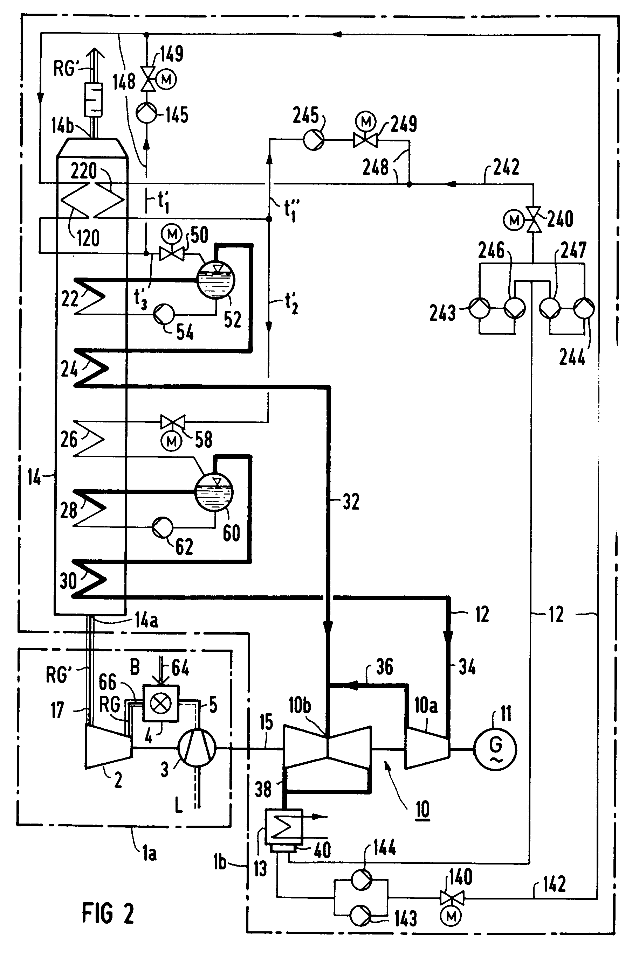

Die Gas- und Dampfturbinenanlage 1 gemäß Figur 2 unterscheidet sich von der in Figur 1 dargestellten lediglich dadurch, daß im Dampferzeuger 14 zwei Kondensatvorwärmer 120 und 220 im Bereich gleicher Rauchgastemperatur angeordnet sind, die zum speicherfreien Zuführen von Kondensat eingangsseitig direkt mit dem Kondensator 13 verbunden sind. Die Kondensatvorwärmer 120 und 220 sind ausgangsseitig einerseits jeweils über eine Umwälzpumpe 145 bzw. 245 mit ihrem Eingang und andererseits mit dem Verdampfersystem der Niederdruck- bzw. Hochdruckstufe verbunden. Dazu ist der Kondensatvorwärmer 120 über eine Kondensatleitung 142, in der ein Ventil 140 und redundant zwei zueinander parallel geschaltete Niederdruck-Speisepumpen 143 und 144 liegen, mit dem Kondensator 13 verbunden. Der Kondensatvorwärmer 220 ist eingangsseitig über eine Kondensatleitung 242, in der ein Ventil 240 und redundant zwei zueinander parallel geschaltete hochtourige Hochdruck-Speisepumpen 243 und 244 mit vorgeschalteten niedertourigen Vorpumpen 246 bzw. 247 liegen, mit dem Kondensator 13 verbunden.

Die Einstellung der Kondensatmenge und der Kondensattemperatur erfolgt für jede Druckstufe getrennt, und zwar wiederum über Vorwärmschleifen 148 und 248, wobei in den Schleifen 148 und 248 geführte Teilmengen t₁' und t₁'' mit Ventilen 149 bzw. 249 veränderbar sind.

Während im Ausführungsbeispiel gemäß Figur 1 die Vorwärmung der Gesamtmenge des Kondensats in dem beiden Verdampfersystemen gemeinsamen Vorwärmer 20 erfolgt, und erst die Verdampfung des vorgewärmten Kondensats in zwei separaten Kreisen erfolgt, wird im Ausführungsbeispiel gemäß Figur 2 sowohl die Vorwärmung des Kondensats als auch die Verdampfung des vorgewärmten Kondensats in zwei separaten Kreisen durchgeführt. Eine Aufteilung des Kondensats auf die Verdampfersysteme erfolgt somit entweder vor oder nach der Vorwärmung, wobei die Kreise in beiden Fällen vor dem Niederdruckteil 10b der Dampfturbine 10 zusammengeführt sind. Sowohl im Ausführungsbeispiel gemäß Figur 1 als auch im Ausführungsbeispiel gemäß Figur 2 erfolgt die Vorwärmung des Kondensats speicherfrei, wobei jeweils eine erste Teilmenge t₁ (Figur 1) bzw. t₁' und t₁'' (Figur 2) des vorgewärmten Kondensats in einer Schleife 48 bzw. 148 und 248 zur Vorwärmung zurückgeführt wird, und wobei weitere Teilmengen t₂ und t₃ (Figur 1) bzw. t₂' und t₃' (Figur 2) des vorgewärmten Kondensats verdampft werden. Die Dampfströme der beiden Druckstufen sind in beiden Fällen zueinander parallel.

Durch die speicherfreie Vorwärmung des Kondensats wird eine besonders einfache Betriebsweise einer Gas- und Dampfturbinenanlage 1a, 1b bei gleichzeitig geringem technischen Aufwand bezüglich einer Regelung der Vorwärmtemperatur des Kondensats und der Menge des im Wasser-Dampf-Kreislaufs 12 während des Betriebs der Anlage kontinuierlich strömenden Kondensats erreicht. Es ist lediglich eine Regelung für die in den Schleifen 48, 148 oder 248 strömenden Teilmengen t₁, t₁' bzw. t₁'' des vorgewärmten Kondensats erforderlich, um die Temperatur des Kondensats am Eingang und am Ausgang der Kondensatvorwärmer 20, 120 bzw. 220 sowie eine Mindestdurchströmung durch diese Vorwärmer einzustellen und zu überwachen.

Bei einem Ein-Druck-System entfällt das Niederdruck-Verdampfersystem, so daß die in das Hochdruck-Verdampfersystem strömende Teilmenge t₂ der lediglich um die geringe Teilmenge t₁ verminderten Gesamtmenge des anfallenden Kondensats entspricht.

Bei einem Drei-Druck-System, das heißt bei einem zusätzlichen Mitteldruckteil der Dampfturbine 10 sowie einem zusätzlichen Zwischenüberhitzer im Dampferzeuger 14, kann auch ein dritter Kondensatvorwärmer vorgesehen sein, der dann in gleicher oder ähnlicher Weise in den Wasser-Dampf-Kreislauf 12 geschaltet und im Dampferzeuger 14 angeordnet ist.

## Patentansprüche

1. Verfahren zum Betreiben einer Gas- und Dampfturbinenanlage, bei dem die im entspannten Arbeitsmittel (RG') der Gasturbine (2) enthaltene Wärme zur Erzeugung von Dampf für die Dampfturbine (10) genutzt wird,
**dadurch gekennzeichnet,**
- daß im Wasser-Dampf-Kreislauf (12) der Dampfturbine (10) strömendes Kondensat speicherfrei vorgewärmt wird,
- daß eine erste Teilmenge (t₁; t₁', t₁'') des vorgewärmten Kondensats in einer Schleife (48; 148, 248) zur weiteren Vorwärmung zurückgeführt wird, und
- daß eine zweite Teilmenge (t₂, t₃; t₂', t₃') des vorgewärmten Kondensats verdampft wird.

2. Verfahren nach Anspruch 1,
**dadurch gekennzeichnet,** daß die Verdampfung in mehreren, vorzugsweise in zwei Druckstufen (52, 60) erfolgt, wobei jeder Druckstufe (52, 60) vorgewärmtes Kondensat zugeführt wird.

3. Verfahren nach Anspruch 1,
**dadurch gekennzeichnet,** daß die Vorwärmung des Kondensats und die Verdampfung des vorgewärmten Kondensats jeweils in einer der Anzahl der Druckstufen (52, 60) entsprechenden Anzahl von Kreisen erfolgt.

4. Verfahren nach einem der Ansprüche 2 oder 3,
**dadurch gekennzeichnet,** daß die Dampfströme der verschiedenen Druckstufen (52, 60) zueinander parallel sind.

5. Gas- und Dampfturbinenanlage mit einem der Gasturbine (2) nachgeschalteten Dampferzeuger (14), dessen Heizflächen (20 bis 30) in den Wasser-Dampf-Kreislauf (12) der Dampfturbine (10) geschaltet sind, insbesondere zur Durchführung des Verfahrens nach einem der Ansprüche 1 bis 4, **gekennzeichnet durch** mindestens einen Kondensatvorwärmer (20; 120, 220), der zum Zuführen von Kondensat eingangsseitig ohne Zwischenschaltung eines Speisewasserbehälters mit einem der Dampfturbine (10) nachgeschalteten Kondensator (13) verbunden ist, und der ausgangsseitig einerseits über eine Umwälzpumpe (45; 145, 245) mit seinem Eingang und andererseits mit einem Verdampfer (22, 28) verbunden ist.

6. Anlage nach Anspruch 5,
**dadurch gekennzeichnet,** daß der Kondensatvorwärmer (20) ausgangsseitig sowohl mit einem Niederdruck-Verdampfer (22) als auch über eine Hochdruckpumpe (55, 56) mit einem Hochdruck-Verdampfer (28) verbunden ist.

7. Anlage nach Anspruch 5,
**dadurch gekennzeichnet,** daß eine der Anzahl von verschiedenen Druckstufen (52, 60) entsprechende Anzahl von Kondensatvorwärmern (120, 220) vorgesehen ist, wobei jeder Kondensatvorwärmer (120, 220) ausgangsseitig mit seinem Eingang und mit einem Verdampfer (22, 28) einer Druckstufe (52, 60) verbunden ist.

8. Anlage nach Anspruch 7,
**dadurch gekennzeichnet,** daß zwei Druckstufen (52, 60) vorgesehen sind.

9. Anlage nach Anspruch 7 oder 8,
**dadurch gekennzeichnet,** daß die Kondensatvorwärmer (120, 220) innerhalb des Dampferzeugers (14) im Bereich gleicher Rauchgastemperatur angeordnet sind.
